Europäisches Patentamt

European Patent Office

Office européen des brevets

(11) Veröffentlichungsnummer: **0 147 370**
**B1**

(12) **EUROPÄISCHE PATENTSCHRIFT**

(45) Veröffentlichungstag der Patentschrifft:
07.02.90

(21) Anmeldenummer: 84810639.9

(22) Anmeldetag: 18.12.84

(51) Int. Cl. ⁵: **B 23 K 11/08**

(54) Verfahren zum Zusammenführen der Kanten eines zu einem Zylinder gerollten Blechabschnittes sowie eine Führungsvorrichtung.

(30) Priorität: 21.12.83 CH 6816/83

(43) Veröffentlichungstag der Anmeldung:
03.07.85 Patentblatt 85/27

(45) Bekanntmachung des Hinweises auf die Patenterteilung:
07.02.90 Patentblatt 90/06

㊴ Bennante Vertragsstaaten:
AT BE CH DE FR GB IT LI NL SE

(56) Entgegenhaltungen:
CH-A-602 255
DE-A-2 839 407
GB-A-2 035 856
US-A-4 354 090

(73) Patentinhaber: CANTEC, INC.
200 West Seventh Street
Fort Worth Texas 76102 (US)

(72) Erfinder: Frei, Siegfried
Schoeckstrasse 3
CH-9000 St. Gallen (CH)

(74) Vertreter: Gachnang, Hans Rudolf
Algisserstrasse 33
CH-8500 Frauenfeld (CH)

LIBERGRAF, STOCKHOLM 1990

## Beschreibung

Die vorliegende Erfindung betrifft ein Verfahren zum Zusammenführen der Kanten eines zu einem Zylinder gerollten Blechabschnittes und eine Führungsvorrichtung gemäss Oberbegriff der Patentansprüche 1 und 4.

Führungsvorrichtungen, auch Z-Schienen genannt, sind aus dem Stande der Technik bekannt und finden insbesondere Verwendung beim Schweissen von zu zylindrischen oder rohrförmigen Körpern gerollten Blechabschnitten, bei denen sich die Blechkanten gegenseitig überlappen. Zum Überführen der Blechkanten in die Überlappung sind die Führungsschienen mit zwei die beiden Blechkanten führenden, geraden Nuten versehen.

Diese Nuten weisen anfänglich gegenseitig einen vertikalen Abstand auf, der gegen das Schienenende hin abnimmt. In der Horizontalen weisen die Gründe der beiden Nuten anfänglich einen grösseren Abstand auf als am Ende der Schiene, so dass die in den Nuten geführten Blechkanten aus einer grossen in die gewünschte und genau vorgegebene, geringere Überlappung geführt werden können (Schweizer Patent Nr. 602 255).

Des weiteren ist es auch bekannt, solche Z-Schienen mit einem schwenkbaren Endstück zu versehen, damit die aus den Nuten am Ende der Z-Schiene austretenden Blechkanten sehr genau auf die Klemmlinie zwischen den beiden Elektrodenrollen der Schweissmaschine ausgerichtet werden können, ohne dass die Blechkanten nach dem Verlassen der Z-Schiene an der Schweissstelle auch nur geringfügig umgelenkt werden müssen (Deutsche Patentschrift Nr. 2 839 407). Das Endstück, welches von der vorerst einstückig hergestellten Z-Schiene abgetrennt und nachträglich durch ein Gelenk wieder mit dieser verbunden wird, weist wie das Hauptstück geradlinige, auf das Z-Schienenende hin zusammenlaufende Nuten auf.

Zum stumpfen Verschweissen der beiden Schnittkanten werden ebenfalls Z-Schienen verwendet, bei denen die Schnittkanten anfänglich wohl in einem vertikalen Abstand zueinander liegen, wie bei der vorgenannten Schiene, sich jedoch nicht überlappen, sondern exakt in einer gemeinsamen vertikalen Ebene gehalten und am Ende der Z-Schiene in stirnseitige Berührung gebracht werden (US-Patent 4 354 090).

Mit dieser bekannten Vorrichtung können die Kanten von exakt zugeschnittenen Blechabschnitten schnell und zuverlässig zusammengeführt und einer Energiestrahlschweissstelle (Laser, Elektronenstrahl, etc.) zugeleitet und stumpf verschweisst werden.

Absolut gerade Zuschnittkanten zu erzeugen ist bei hoher Produktionsleistung ausserhalb des Labors sehr schwierig und teuer, denn schon geringste Abweichungen im Rundlauf der Messerscheiben der heute stark verbreiteten Rollscheren bewirken einen Taumeleffekt der Schneide der Scheiben und erzeugen folglich einen bogenförmigen Verlauf der Schnittkanten. Beim Zusammenfügen solcher Bleche mit sogenanntem Bogenschnitt liegen die zusammenzuschweißenden Kanten daher nicht mehr auf der gesamten Länge bündig aneinander an. Dies kann zu Fehlschweissungen oder, wenn die Bogenhöhe derart gross ist, dass die Kanten weit auseinanderliegen, zu ungeschweissten Bereichen längs der Stossstelle führen.

Des weiteren neigen die noch ungeschweissten Blechkanten während des Schweissvorganges dazu, sich auseinanderzuspreizen. Um diesen Spreizeffekt auszugleichen, wurde bei den Z-Schienen für Überlappschweissmaschinen vorgeschlagen, die Blechkanten anfänglich mehr als notwendig, d.h. mehr als der Wert der Überlappung in der Schweißstelle, überlappend zu führen und erst unmittelbar am Schweissort auf den gewünschten Sollwert zu bringen. Auf diese Weise gelingt es, den Spreizeffekt auszugleichen.

Bei leicht bogenförmig zugeschnittenen Blechkanten kann dieser Trick für das stumpfe Verschweissen nicht angewendet werden, denn das Manko an Blech im Bogen kann dadurch nicht ergänzt werden.

Um die beiden sich in der Praxis um weniger als einen Millimeter überlappenden Blechkanten an der Schweißstelle zusammenhalten zu können, müssen in diesem Bereich Anpressmittel, z. B. ein Kalibrierrollenkranz vorgesehen werden, der den rohrförmigen Blechkörper straff führt. Eine straffe Führung der dünnen Blechkörper hat grosse Nachteile, weil durch den hohen Druck der scharfen Blechkanten eine grosse Reibung in den Nuten der Z-Schiene entsteht und folglich grosser Verschleiss auftritt und Kratzer auf der Oberfläche der Blechkörper entstehen können.

Der vorliegenden Erfindung liegt daher die Aufgabe zugrunde, die Nachteile der bekannten Verfahren und Vorrichtungen zu vermeiden und eine Führungsschiene zu schaffen, welche beim stumpfen Verschweissen ein jederzeit bündiges Zusammenführen auch von ungenauen, eine nicht gerade Schnittkante aufweisenden Blechen ermöglicht und beim Quetschnahtschweissen eine gleichbleibende Überlappung gewährleistet, ohne dass auf die Blechkanten wesentliche tangentiale Schubkräfte von aussen aufgebracht werden müssen.

Nach der Erfindung werden diese Aufgaben gemäss den kennzeichnenden Merkmalen der Patentansprüche 1 und 4 gelöst. Weitere vorteilhafte Ausführungsformen sind in den abhängigen Ansprüchen definiert.

Überraschenderweise können durch den bogenförmigen Verlauf der Führungsnuten nicht nur Unstetigkeiten der Zuschnittskanten ausgeglichen bzw. während des Schweissvorganges aufgehoben werden, sondern die beiden Stirnflächen der Schnittkanten liegen nach dem Austritt aus der Führungsschiene und während des Stumpfschweissvorganges satt aneinander an, so dass die an der Schweissstelle erweichenden Kantenbereiche auch ohne Zuhilfenahme von eine Spannkraft auf die Bleche ausübenden Kalibriermitteln, z. B. einem Rollenkranz, leicht gestaucht und verschweisst bzw. verschmiedet werden können. Der Wegfall von auf das Blech wirkenden Anpressmitteln hat den Vorteil, dass das eingerollte Blech mit geringem Widerstand längs der Führungsschiene transportiert werden kann und damit die Gefahr von Eindrücken und Markierungen auf dem Blech durch die Transportfinger verhindert werden können. Des weiteren wird durch den Wegfall starker Anpressmittel, welche die zum stumpfen Schweissen notwendige Schweisskraft aufzubringen haben, die Führungsschiene, im besonderen deren Nutgründe, einem wesentlich geringeren Verschleiss durch die scharfen Blechkanten unterworfen. Auch der beim Stumpfschweissen auftretende Umfangsverlust wird laufend kompensiert.

Bei sich überlappend zu schweissenden Blechkanten kann einerseits auf die bisher notwendige, auf das Ende der Z-Schiene zu geringer werdende Überlappungsbreite der Blechkanten verzichtet werden und andererseits kann auch teilweise auf die die Blechkanten in überlappender Position haltende Führungsmittel verzichtet werden. Wie beim Stumpfschweissen verringert sich auch in dieser Anwendungsart der Verschleiss der Z-Schiene, indem nämlich die Spannkraft der beiden zu verschweissenden Blechkanten nicht wie bisher brutal von aussen auf die dünnen und sehr verletzlichen Bleche aufgebracht, sondern durch deren eigene Spannung infolge dreidimensionaler Biegung auf natürlichem Weg erzeugt wird.

Anhand illustrierter Ausführungsbeispiele wird die Erfindung näher beschrieben. Es zeigen:

Figur 1    eine perspektivische Darstellung einer Führungsschiene sowie eines zu einem Zylinder gerollten Bleches für stumpf zusammenzuführende Blechkanten,

Figur 2    eine Seitenansicht der Führungsschiene,

Figur 3    einen Schnitt durch die Führungsschiene längs Linie III - III in Figur 2,

Figur 4    eine Ansicht der Führungsschiene aus Richtung des Pfeiles A.

Figur 5    einen Querschnitt durch die Führungsschiene längs Linie V - V in Figur 2,

Figur 6    einen Querschnitt durch die Führungsschiene längs Linie VI - VI in Figur 2,

Figur 7    eine perspektivische Darstellung einer Führungsschiene sowie eines zu einem Zylinder gerollten Bleches für überlappend zusammengeführte Blechkanten,

Figur 8    eine Seitenansicht der Führungsschiene,

Figur 9    einen Schnitt durch die Führungsschiene längs Linie IX - IX in Figur 8,

Figur 10    eine Ansicht der Führungsschiene aus Richtung des Pfeiles B,

Figur 11    einen Querschnitt durch die Führungsschiene längs Linie XI - XI in Figur 8,

Figur 12    einen Querschnitt durch die Führungsschiene längs Linie XII - XII in Figur 8,

Figur 13    eine Ansicht einer Führungsschiene mit geradlinig ausgebildeten Nuten und einer Vorrichtung zum Krümmen der Nuten,

Figur 14    eine Ansicht einer aus Rollen bestehenden Führungsvorrichtung,

Figur 15    einen Querschnitt längs Linie XV - XV in Figur 14 und

Figur 16    einen Querschnitt längs Linie XVI - XVI in Figur 14.

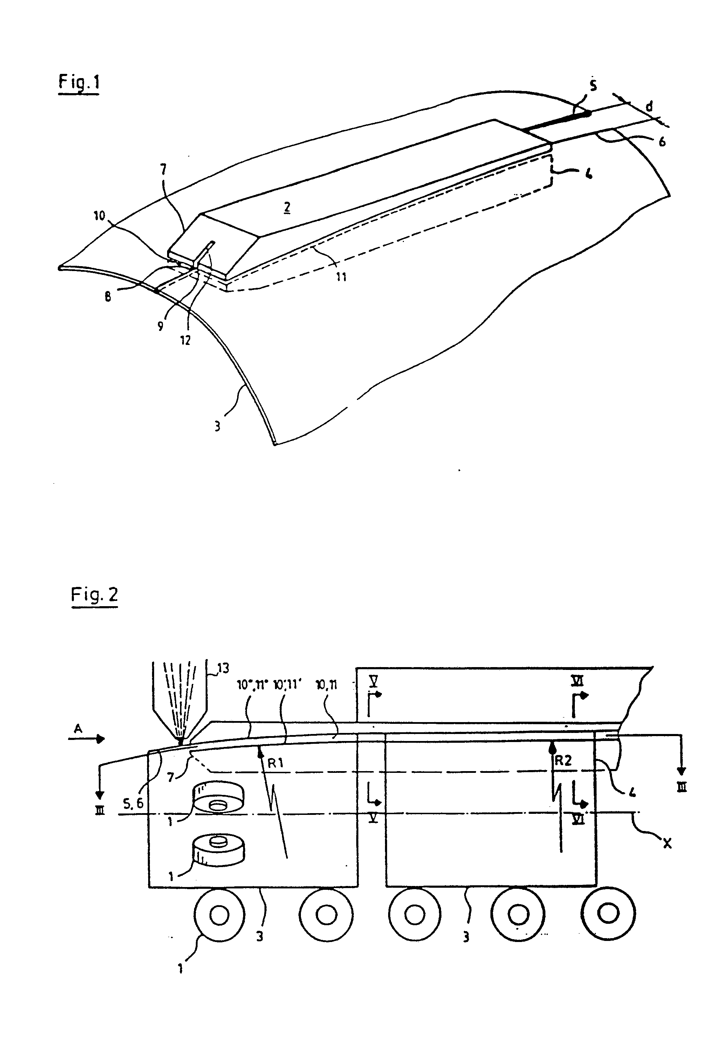

In Figur 1 ist eine Führungsschiene 2 als langgestreckter Körper mit zwei sich über die gesamte Länge der Schiene 2 erstreckenden, an den beiden einander gegenüberliegenden vertikalen Flanken angebrachten Nuten 10 und 11 dargestellt. Am einlaufseitigen Ende 4 - in der Figur auf der rechten Seite - weisen die Nutgründe 8 und 9 der Nuten 10 und 11 einen Abstand $d$ auf; am ausgangsseitigen Ende 7 treffen sich die beiden Nutgründe 8 und 9. Der die beiden einander gegenüberliegenden Nuten 10 und 11 trennende, die Nutgründe 8 und 9 bildende Steg 12 weist folglich die Gestalt eines Keiles auf.

Deutlicher erkennbar als in Figur 1 ist in Figur 2 der bogenförmig gekrümmte Verlauf der Nuten 10 und 11. Der Radius der Krümmung der parallel verlaufenden Nutenflanken 10', 10" und 11', 11" ist am ausgangsseitigen Ende 7 mit dem Symbol $R_1$ angegeben. Er kann über einen Teil der Führungsschiene 2 konstant sein, er kann auch vom eingangsseitigen Ende 4 zum ausgangsseitigen Ende 7 zunehmend sein, wobei eingangsseitig die Nuten 10 und 11 vorerst geradlinig verlaufen können. Der Radius $R_2$ der Krümmung am Ende 4 würde dann gegen gehen.

Die Nutgründe 8 und 9 sind eben und der Abstand der Nutenflanken 10', 10" bzw. 11', 11" im wesentlichen konstant. Wenige Millimeter ausserhalb des Endes 7 ist schematisch und beispielsweise als Schweissquelle ein Energiestrahlschweisskopf 13, z. B. ein $CO_2$-Laser dargestellt, mit dessen Hilfe die eine oder auch beide Kanten 5 und 6 eines zu einem Zylinder gerollten Bleches 3 auf Schweisstemperatur erwärmt werden können.

Das Blech 3 - der ungeschweisste Rumpf - wird durch ringförmig um eine geometrische Achse X angeordnete Rollen 1 geführt und zwar so, dass die beiden Blechkanten 5 und 6 in den Nuten 10 und 11 der Schiene 2 gleiten können. Eine Transportvorrichtung - der besseren Übersicht halber nicht gezeigt - befördert die sich folgenden, in einer Rollformstation gerundeten Bleche 3 entlang der Führungsschiene 2 zur Schweissstation 13.

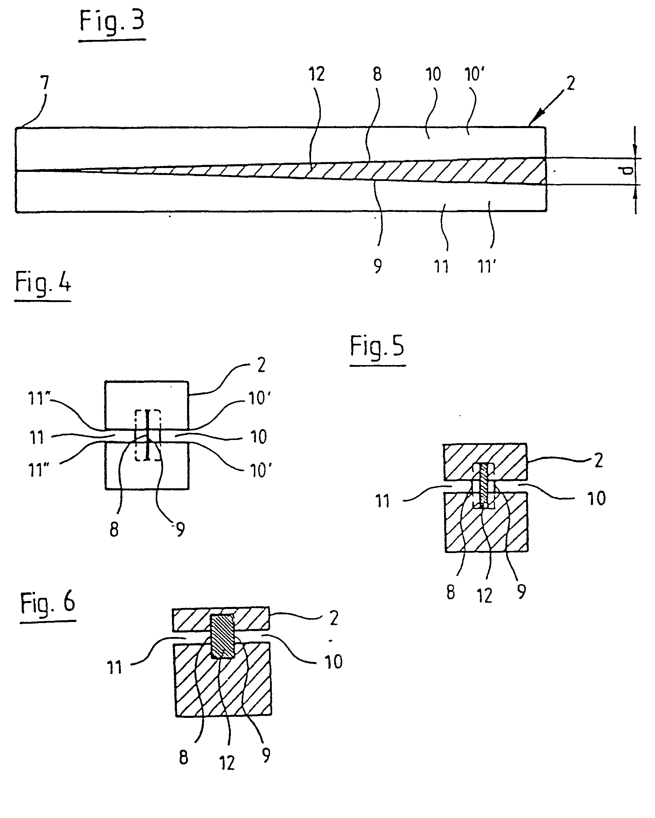

Im Schnitt nach Figur 3, der durch die beiden gekrümmten Nuten 10 und 11 verläuft, ist der sich zum auslaufseitigen Ende 7 hin verjüngende Steg 12 deutlich sichtbar. Die seitlichen Flanken 10' und 11' der Nuten 10 und 11 liegen auf derselben Höhe, so dass auch die Kantenbereiche des längs der Führungsschiene 2 geführten Rumpfes 3, getrennt durch den Steg 12, einander stets gegenüber- und in derselben gekrümmten Fläche liegen. Der Abstand der Nutgründe 8, 9 und damit auch der Blechkanten 5 und 6 verringert sich kontinuierlich, bis sich die Kanten 5 und 6 am Ende 7 berühren. Aus herstellungstechnischen Gründen läuft der Steg 12 nicht in eine messerscharfe Kante aus, sondern endet stumpf wenige Millimeter vor dem geometrischen Schnittpunkt der Nutgründe 8, 9, so dass auch die Berührung der Kanten 5 und 6 nicht unmittelbar am Ende des Steges 12 erfolgt. Aus den Figuren 4, 5 und 6, welche eine Ansicht bzw. Querschnitte der Führungsschiene 2 an verschiedenen Stellen zeigen, ist die Ausgestaltung der Nuten 5 und 6 bzw. der Nutgründe 8 und 9 dargestellt. Anstelle einer Herstellung der Führungsschiene 2 aus einem einzigen Stück, was selbstverständlich möglich wäre, kann der die Nutgründe 8 und 9 bildende Steg 12 aus einem härteren und damit verschleissfesteren Material hergestellt sein als die übrigen, einem geringen Verschleiss unterworfenen Teile. Nicht nur aus Gründen der Verschleissfestigkeit kann eine Aufteilung interessant sein, sondern insbesondere auch aus fabrikatorischen Gründen zur Herstellung der gekrümmt verlaufenden, seitlichen Begrenzungswände 10', 10" und 11', 11" der Nuten 10 und 11.

Anschliessend wird die Funktionsweise der Führungsschiene 2 nach Figur 1, soweit diese dem Fachmann nicht bereits aus dem Aufbau ersichtlich geworden ist, teilweise in Gegenüberstellung mit einer herkömmlichen Schiene näher erläutert. Die Kanten 5 und 6 des in herkömmlicher Weise zu einem Zylinder oder Dosenrumpf gerollten Blechabschnittes 3 werden mit horizontal gegenseitigem Abstand $d$ in die Nuten 10 und 11 der Führungsschiene 2 eingeleitet und mittels eines an sich bekannten Transportsystems (nicht gezeigt) längs der Schiene 2 geführt. Infolge der horizontal zusammenlaufenden Nutgründe 8 und 9 nähern sich die Blechkanten 5 und 6 sukzessive und treffen sich unmittelbar ausserhalb des ausgangsseitigen Endes 7 der Schiene 2. Wären nun die Flanken 10', 10" und 11', 11" der Nuten 10 und 11 geradlinig ausgebildet, so ergäbe sich nach der ersten punktförmigen Berührung der Kantenenden ein v-förmiger Spalt und es könnte keine Schweissung stattfinden. Durch die Krümmung $R_1$ der beiden Nuten 10 und 11 werden die darin geführten Kanten 5, 6 bzw. Kantenbereiche des Rumpfes 3 ebenfalls gekrümmt.

Die Krümmung der beiden Kanten 5, 6 bzw. der Kantenbereiche quer zur Mantelkrümmung sowie das gleichzeitige horizontale Zusammenlaufen der Kanten 5 und 6 gegen das Ende 7 bewirken, dass die Kanten 5 und 6 nach dem Verlassen der Schiene 2 anfänglich ebenfalls in punktförmigen Kontakt kommen, dann aber sofort längs dem gesamten, aus der Führungsschiene 2 ausgetretenen Abschnitt zwischen dem Ende 7 der Schiene 2 und der Schweissstelle 13 innig aneinander anliegen.

Sind die beiden Schnittkanten 5 und 6 völlig gerade (optimale Voraussetzung), so bleiben sie ausserhalb der Schiene 2 statt aneinanderliegend, infolge der gegenseitigen Spannkräfte, hervorgerufen durch die Eigenelastizität der Bleche, in gebogenem Zustand und können in dieser Form verschweisst werden. Nachher kehren sie in den gestreckten Zustand zurück. Weist eine oder sogar beide Kanten 5 und 6 einen Bogenschnitt nach innen auf, so liegen diese Kanten nach deren Transport durch eine herkömmliche Führungsschiene mit geradlinig verlaufenden Nuten nur an den Enden des Rumpfes 3 punktförmig aufeinander auf und es kann keine zuverlässige oder überhaupt keine Verschweissung erfolgen, denn es fehlt die satte Berührung und damit die Schweisskraft, weil sich die Stirnflächen der Blechkanten 5 und 6 nicht berühren können.

In den gekrümmten Nuten 8 und 9 hingegen bleiben auch solche bogenförmige Kanten 5 und 6 vor und während des Schweissvorganges in starkem Kontakt, so dass eine einwandfreie Verschweissung stattfinden kann. Nach dem Austritt aus der Führungsschiene 2 kommen nämlich auch diese Kanten 5 und 6 sofort in satte, gegenseitige Anlage. Infolge des "fehlenden" Materials (Bogenschnitt) gehen die Kantenbereiche in einen weniger gekrümmtem Zustand über und werden so verschweisst. Das gleiche gilt auch für Kanten mit Bogenschnitt nach aussen oder für Kombinationen der beiden Unregelmässigkeiten, wobei zwei Kanten mit Bogenschnitt nach aussen eine zusätzliche Biegung nach dem Austritt aus der Führungsschiene 2 hervorrufen.

Die Abweichungen der Scheitelhöhe von Bogenschnitten von exakten Geradschnitten liegt in der Praxis im Bereich von einigen Hundertstelsbis einigen Zehntelsmillimetern und variiert je nach Länge der zu verschweissenden Kanten. Es ist deshalb selbstverständlich, dass die Krümmungsradien $R_1$, $R_2$ sehr gross zu wählen sind und im Bereich von 1,0 m bis 10 und mehr Meter liegen können. Die bleibende Krümmung der Schweissnaht von Blechen mit Bogenschnitt ist derart minim, dass sie allenfalls als geringfügige "Welle" sichtbar wird.

Die Verwendung der beschriebenen Z-Schiene beschränkt sich nicht auf die oben angeführten Schweissverfahren. Sie kann nämlich in modifizierter Form ebenfalls beim Schweissen von sich überlappenden Blechkanten 5, 6 eingesetzt werden.

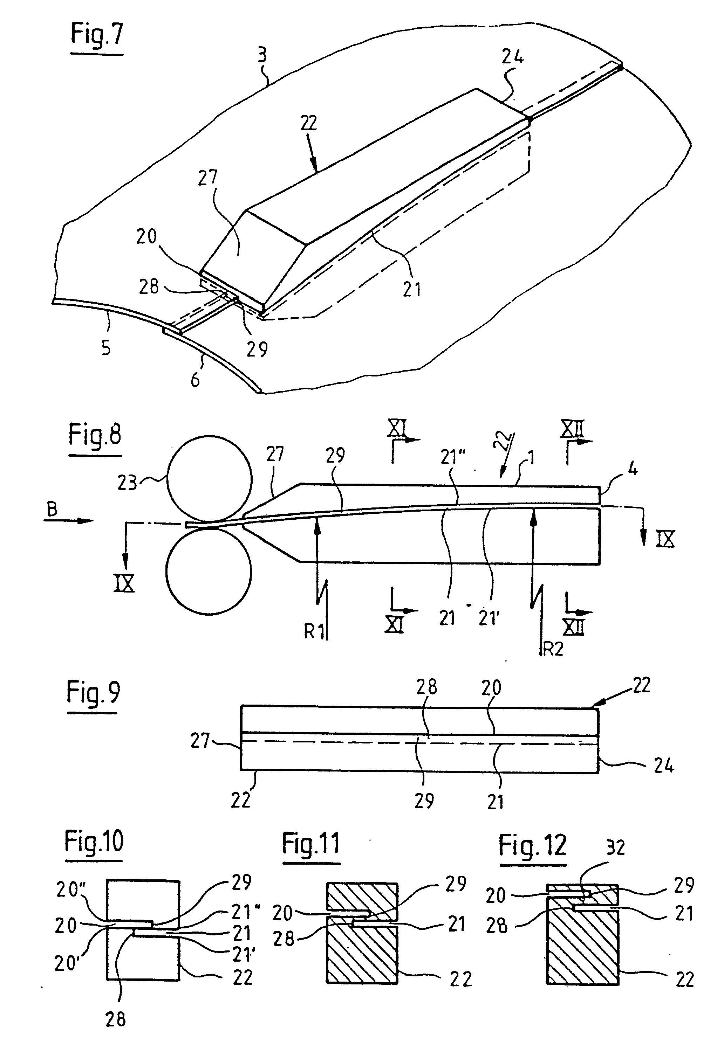

In der in den Figuren 7 bis 12 dargestellten Führungsschiene 22 zum Zusammenführen von Blechkanten 5, 6 in eine Überlappung sind ebenfalls zwei Nuten 20 und 21 angebracht; diese liegen nun nicht auf derselben Höhe, sondern nähern sich vom einlaufseitigen Ende 24 zum auslaufseitigen Ende 27 in vertikaler Richtung. Die Nutgründe 28 und 29 der Nuten 20 und 21 weisen ausgangsseitig einen Abstand von etwa der Grösse der gewünschten Überlappung der Blechkanten 5 und 6 auf. Eingangsseitig ist der Abstand der Nutgründe 28 und 29 gleich oder geringer als ausgangsseitig, d.h. der Betrag der Überlappung der Blechkantenbereiche bleibt, ganz im Gegensatz zu den herkömmlichen Z-Schienen, konstant oder vergrössert sich in Richtung auf die Schweißstelle hin. Wie bei der Führungsschiene 2 zum stumpfen Zusammenführen zweier Blechkanten 5, 6 weisen die Nuten 20 und 21 der Führungsschiene 22 ebenfalls eine bogenförmige Krümmung (Radius $R_1$ und $R_2$) auf (Figuren 7 und 8). Im Längsschnitt nach Figur 9 zeigt die ausgezogene Linie 28 den Nutgrund der untenliegenden Nut 21, durch die der Schnitt verläuft, für die Blechkante 6; die gebrochene Linie 29 der Nutgrund der obenliegenden, die untere Nut 21 überlappende Nut 20.

In den Figuren 10 bis 12 ist die jeweilige Lage der Nutgründe 28 und 29 sichtbar. Am Ende 24 (Figur 10) gelangen, zusammengeschweisst. Wie üblich beim sogenannten Quetschnahtschweissen neigen die beiden Blechkanten 5 und 6 dazu, sich zu spreizen. Bei herkömmlichen Z-Schienen mit geradlinig verlaufenden Nutenflanken 20' 20", 21', 21" wird dies mit den eingangs genannten Mitteln und durch Spannmittel (Kalibrierrollenkranz in der Schweissebene) sowie Elektrodenrollen mit verschränkten Achsen zwangsweise unterbunden. Bei der Führungsschiene 22 mit gekrümmten Nuten 20, 21 hingegen versuchen die gekrümmten Blechkanten 5 und 6 wegen der Eigenelastizität wieder in den gestreckten Zustand zurückzukehren. Weil sie aber am vorne liegenden Ende der beiden Kanten 5 und 6 bereits zusammengeschweisst sind, bewirkt das Zurückkehren der Kanten 5, 6 in die Ebene ein Übereinanderschieben der nachfolgenden, ungeschweissten Kantenbereiche. Zusätzliche, die dünnen Bleche belastende Spannmittel können somit entfallen.

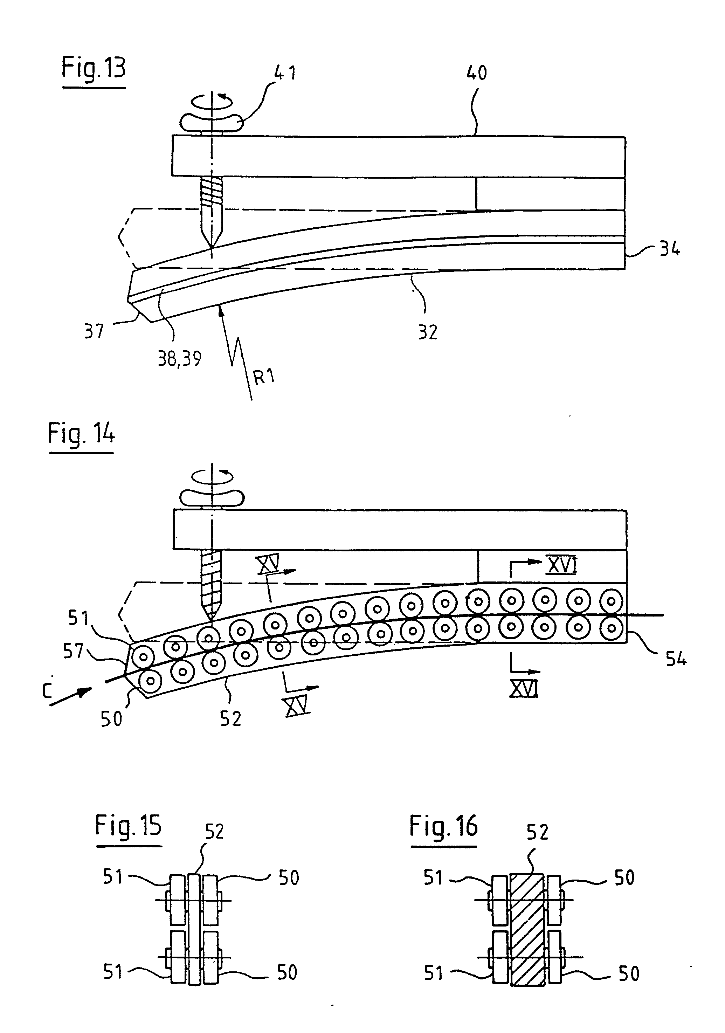

In einer weiteren Ausgestaltung der Erfindung gemäss Figur 13 wird die bogenförmige Krümmung der Nuten 38, 39 durch Biegen der Führungsschiene 32 erzeugt. Am eingangsseitigen Ende 34 wird die Schiene 32 deshalb fest eingespannt, z. B. fest mit dem Maschinengestell 40 verschraubt. Das freie, ausgangsseitige Ende 37 wird durch ein Spannmittel, z. B. eine Spannschraube 41, die mit dem Maschinengestell 40 verbunden ist, auf Biegung belastet. In gebrochenen Linien ist der ursprüngliche, gestreckte Zustand angedeutet. Selbstverständlich ist der Betrag der Durchbiegung in der Figur 13 aus Gründen der Anschaulichkeit stark übertrieben dargestellt. In Wirklichkeit beträgt der Radius $R_1$, wie in den vorstehend beschriebenen Beispielen, 1 m bis 10 und mehr Meter und folglich die Durchbiegung einer Führungsschiene von 150 mm Länge wenige Zehntels- bis einige Millimeter.

Als Spannmittel 41 kann auch eine Extenterscheibe oder ein beliebiges anderes Maschinenelement treten, das eine Kraft auf das Ende 37 der Schiene 32 aufzubringen vermag.

Eine andere Ausführungsform der Erfindung zeigen die Figuren 14, 15 und 16. Anstelle von Nuten zur Führung der Blechkanten 5, 6 sind an einem als Tragkörper ausgebildeten Steg 52 eine Vielzahl von paarweise angeordneten Rollenpaaren 50 und 51 drehbar befestigt. Zwischen den Rollenpaaren 50, 51 ist gerade soviel Raum freigelassen, dass die Kante 5, 6 eines Bleches ungehindert durchgleiten kann. Der Steg 52 weist vorzugsweise im Bereich des Spaltes zwischen den Rollenpaaren 50, 51 eine harte verschleissfeste Oberfläche auf. Die Rollen 50, 51 haben mit Vorteil ebenfalls eine harte Oberfläche; sie können aber auch aus einem harten, verschleissfesten Material, z. B. Keramik, bestehen.

Der durch die Vielzahl von Spalten zwischen den Rollenpaaren 50, 51 gebildeten nutförmigen Führung beidseits des Steges 42 kann entweder durch Biegen des die Rollenpaare 50, 51 tragenden Steges 52 eine Krümmung gegeben werden, wie in Figur 14 gezeigt, oder die Drehachsen der Rollenpaare 50, 51 sind längs einer bogenförmigen Linie am Steg 52 befestigt.

Wie in den anderen Beispielen nimmt die Dikke des Steges 52 vom eingangsseitigen Ende 54 zum ausgangsseitigen Ende 57 ab und läuft dort in einer mehr oder weniger scharfen Kante aus (Figuren 15 und 16).

Die Funktionsweise der in den Figuren 13 bis 16 beschriebenen Ausführungsformen ist gleich wie bei der Ausführungsform nach der Figur 1 bis 6. Der Betrag, um den das ausgangsseitige Ende der Führungsschienen 32, 52 nach unten gebogen wird, liegt im Bereich von wenigen Zehntelsmillimetern bis einigen Millimetern je nach Länge des biegsamen Bereiches der Führungsschiene.

**Patentansprüche**

1. Verfahren zum Zusammenführen der Kanten eines zu einem Zylinder geformten oder gerollten Blechabschnittes während des Transportes des gerollten Blechabschnittes von einer Formmaschine zu einer Fügestation mit einer die Blechabschnitte an die Fügestation heranführenden Führungsvorrichtung, dadurch gekennzeichnet, dass die Kanten (5, 6) der Blechabschnitte (3) in der Führungsvorrichtung (2, 22, 32, 52), in Richtung auf die Längsachse (X) des Zylinders bogenförmig gekrümmt und gleichzeitig zusammengeführt werden, bevor sie in gegenseitige Berührung und anschliessend in die Fügestation (13, 23) gelangen.

2. Verfahren nach Anspruch 1 dadurch gekennzeichnet, dass die Kanten (5, 6) in der Führungsvorrichtung (2, 22, 32, 52) aus dem anfänglich geradlinigen Zustand in Richtung auf die Fügestation (13, 23) hin zunehmend gekrümmt werden.

3. Verfahren nach einem der Ansprüche 1 und 2, dadurch gekennzeichnet, dass die Krümmung der Kanten (5, 6) durch Biegen einer ursprünglich geraden Führungsvorrichtung (32) erfolgt.

4. Führungsvorrichtung zum Zusammenführen der Kanten (5, 6) eines zu einem Zylinder gerollten Blechabschnittes (3), insbesondere Feinblech- oder Feinstblechabschnittes, während des Transportes des Abschnittes (3) von einer Formmaschine zu einer Fügestation (13, 23) bestehend aus einer unmittelbar vor der Fügestation (13) angeordneten, im wesentlichen stabförmigen Führungsschiene (2, 22, 32) mit zwei seitlich in dieser vom einlaufseitigen zum auslaufseitigen Ende sich nähernden Führungsnuten (10, 20 / 11, 21) für die Kanten (5, 6) des Blechabschnittes (3), dadurch gekennzeichnet, dass die Nuten (10, 20 / 11, 21) einen bogenförmigen, die Kantenbereiche (5, 6) des darin geführten Blechabschnittes (3) in Richtung auf die Längsachse (X) des Zylinders zu gekrümmten Verlauf aufweisen.

5. Führungsschiene nach Anspruch 1 dadurch gekennzeichnet, dass der Krümmungsradius ($R_1$, $R_2$) der Nuten (10, 20 / 11, 21) vom einlaufseitigen Ende (4, 34, 54) zum auslaufseitigen Ende (7, 37, 57) der Schiene (2, 22, 32, 52) abnimmt.

6. Führungsschiene nach einem oder beiden Ansprüchen 4 und 5, dadurch gekennzeichnet, dass die Nuten (10, 20 / 11, 21) einlaufseitig vorerst geradlinig verlaufen, (Krümmungsradius $R_2 = \infty$ und kurz vor dem auslaufseitigen Ende (7, 27, 37) einen gekrümmten Verlauf aufweisen.

7. Führungsschiene nach einem oder mehreren der Ansprüche 4, 5 und 6, dadurch gekennzeichnet, dass die Krümmung der Nuten (10, 20 / 11, 21) eine Bogenhöhe zwischen 0,3 mm und 2,0 mm bzw. einen Krümmungsradius R von 1 m bis 10 m aufweist.

8. Führungsschiene nach Anspruch 7, dadurch gekennzeichnet, dass der Krümmungsradius ($R_1$) am Ende (7, 27, 37) 5 m beträgt.

9. Führungsschiene nach einem der Ansprüche 4 bis 8, dadurch gekennzeichnet, dass die beiden Nuten (10, 11) parallel zueinander verlaufen und einander gegenüberliegen.

10. Führungsschiene nach einem der Ansprüche 4 bis 9, dadurch gekennzeichnet, dass die Nutgründe (8, 38 / 9, 39) der Nuten (10, 11) durch einen die beiden Nuten (10, 11) trennenden, vom einlaufseitigen zum auslaufseitigen Ende (7, 37) sich verjüngenden Steg (12, 32, 52) gebildet werden.

11. Führungsschiene nach Anspruch 10, dadurch gekennzeichnet, dass der Steg (12, 32, 52) aus einem harten, verschleissfesten Material besteht.

12. Führungsschiene nach einem der Ansprüche 4 bis 8, dadurch gekennzeichnet, dass die beiden Nuten (20, 21) vertikal versetzt übereinander angeordnet sind und sich am ausgangsseitigen Ende (27) der Schiene (22) um einen Betrag überlappen, der im wesentlichen der gewünschten Überlappung der Blechkanten (5, 6) an der Fügestation (23) entspricht.

13. Führungsschiene nach Anspruch 12, dadurch gekennzeichnet, dass die beiden Nuten (20, 21) sich am eingangsseitigen Ende (24) der Schiene (22) um einen geringeren Betrag überlappen, als am ausgangsseitigen Ende (27) der Schiene (22).

14. Führungsschiene nach einem der Ansprüche 4 bis 8, dadurch gekennzeichnet, dass durch die Klemmlinie einer Vielzahl in zwei parallel zueinander verlaufenden Reihen angeordneter Rollen (50, 51) nutförmige Führungen für die Blechkanten (5, 6) gebildet werden.

15. Führungsschiene nach Anspruch 14, dadurch gekennzeichnet, dass der die Rollenachsen tragende Steg (52) den Nutgrund für die durch die Rollen (50, 51) gebildete, nutförmige Führung bildet.

16. Führungsschiene nach einem der Ansprüche 4, 12 und 15, dadurch gekennzeichnet, dass die Krümmung der Nuten (10, 20 / 11, 21) durch Biegen der Führungsschiene (2, 22, 32) bzw. des Steges (52) erzeugt wird.

## Claims

1. Process for bringing together the edges of a sheet metal portion, which has been shaped or rolled to form a cylinder, during the conveyance of the rolled sheet metal portion from a shaping machine to a jointing station, by utilisation of a guiding means, which conducts the sheet metal portions to the jointing station, characterised in that the edges (5, 6) of the sheet metal portions (3) in the guiding means (2, 22, 32, 52) are curved in an arcuate manner in the direction of the longitudinal axis (X) of the cylinder and are simultaneously brought together before they come into contact with each other and subsequently enter the jointing station (13, 23).

2. Process according to claim 1, characterised in that the edges (5, 6) in the guiding means (2, 22, 32, 52) become increasingly curved from their initially rectilinear state as they advance towards the jointing station (13, 23).

3. Process according to one of claims 1 and 2, characterised in that the curvature of the edges (5, 6) is effected by bending an originally straight guiding means (32).

4. Guiding means for bringing together the edges (5, 6) of a sheet metal portion (3), more especially a thin sheet metal portion or a very thin sheet metal portion, which has been rolled to form a cylinder, during the conveyance of the portion (3) from a shaping machine to a jointing station (13, 23), comprising a substantially barlike guide rail (2, 22, 32), which is disposed immediately before the jointing station (13) and is provided with two guide grooves (10, 20 / 11, 21), which laterally approach one another in said rail from the inlet end to the outlet end, for guiding the edges (5, 6) of the sheet metal portion (3), characterised in that the grooves (10, 20 / 11, 21) have an arcuate configuration which curves the edge regions (5, 6) of the sheet metal portion (3), conducted therein, towards the longitudinal axis (X) of the cylinder.

5. Guide rail according to claim 1, characterised in that the radius of curvature ($R_1$, $R_2$) of the grooves (10, 20 / 11, 21) decreases from the inlet end (4, 34, 54) to the outlet end (7, 37, 57) of the rail (2, 22, 32, 52).

6. Guide rail according to one of, or both, claims 4 and 5, characterised in that the grooves (10, 20 / 11, 21) extend initially in a rectilinear manner at the inlet end (radius of curvature $R_2 = \infty$) and have a curved configuration shortly before the outlet end (7, 27, 37).

7. Guide rail according to one or more of claims 4, 5 and 6, characterised in that the curvature of the grooves (10, 20 / 11, 21) has an arcuate height of between 0.3 mm and 2.0 mm, or respectively a radius of curvature R from 1 m to 10 m.

8. Guide rail according to claim 7, characterised in that the radius of curvature ($R_1$) at the end (7, 27, 37) is 5 m.

9. Guide rail according to one of claims 4 to 8, characterised in that the two grooves (10, 11) extend parallel with one another and are situated opposite one another.

10. Guide rail according to one of claims 4 to 9, characterised in that the groove bases (8, 38 / 9, 39) of the grooves (10, 11) are formed by a cross-piece member (12, 32, 52), which separates the two grooves (10, 11) and tapers from the inlet to the outlet end (7, 37).

11. Guide rail according to claim 10, characterised in that the cross-piece member (12, 32, 52) is formed from a hard, wear-resistant material.

12. Guide rail according to one of claims 4 to 8, characterised in that the two grooves (20, 21) are disposed one above the other in a vertically offset manner and overlap each other at the outlet end (27) of the rail (22) by an amount corresponding substantially to the desired overlapping of the sheet metal edges (5, 6) at the jointing station (23).

13. Guide rail according to claim 12, characterised in that the two grooves (20, 21) overlap each other at the inlet end (24) of the rail (22) by an amount which is smaller than at the outlet end (27) of the rail (22).

14. Guide rail according to one of claims 4 to 8, characterised in that groove-like guides for the sheet metal edges (5, 6) are formed by the clamping line of a plurality of rollers (50, 51), which are disposed in two rows extending parallel with one another.

15. Guide rail according to claim 14, characterised in that the cross-piece member (52), which supports the roller axles, forms the groove base for the groove-like guide formed by the rollers (50, 51).

16. Guide rail according to one of claims 4, 12 and 15, characterised in that the curvature of the grooves (10, 20 / 11, 21) is produced by bending the guide rail (2, 22, 32) or respectively the cross-piece member (52).

**Revendications**

1. Procédé pour guider ensemble les bords d'une pièce de tôle mise en forme ou enroulée en cylindre, pendant le déplacement de cette pièce de tôle enroulée d'une machine de formage à poste d'assemblage où les bords de la pièce de tôle sont fixés l'un à l'autre par un joint, en utilisant un dispositif de guidage qui amène chaque pièce de tôle au poste d'assemblage; caractérisé en ce qu'on donne une forme courbe aux bords (5, 6) des pièces de tôle (3) dans le dispositif de guidage (2, 22, 32, 52) dans le sens de l'axe longitudinal (X) du cylindre, en assurant en même temps le guidage simultané des deux bords, avant leur mise en contact mutuel précédant leur arrivée au poste d'assemblage (13, 23).

2. Procédé selon la revendication 1, caractérisé en ce qu'on donne aux bords (5, 6) dans le dispositif de guidage (2, 22, 32, 52) une forme courbe progressivement accentuée en direction du poste d'assemblage (13, 23), à partir de leur forme rectiligne initiale.

3. Procédé selon l'une des revendications 1 et 2, caractérisé en ce qu'on réalise la mise en forme courbe des bords (5, 6) en déformant par flexion un dispositif de guidage (32) ayant initialement une forme rectiligne.

4. Dispositif de guidage pour guider ensemble les bords (5, 6) d'une pièce de tôle (3) enroulée en cylindre, en particulier d'une pièce en tôle mince ou très mince, pendant le déplacement de cette pièce de tôle (3) d'une machine de mise en forme à un poste d'assemblage (13, 23) où les deux bords sont fixés l'un à l'autre par un joint; ce dispositif comportant un rail de guidage (2, 22, 32) ayant sensiblement la forme d'un barreau, disposé immédiatement avant le poste d'assemblage (13), et dans lequel on a prévu, pour recevoir les bords (5,6) de la pièce de tôle (3), deux rainures de guidage latérales (10, 20; 11, 21) qui se rapprochent l'une de l'autre en allant de leur extrémité d'entrée leur extrémité de sortie; ce dispositif étant caractérisé en ce que les rainures (10, 20; 11, 21) présentent une forme courbe dans le sens de l'axe longitudinal (X) du cylindre, pour assurer la déformation courbe des zones de bordure (5, 6) de la pièce en tôle (3) qui est guidée par le dispositif dans le sens précité.

5. Rail de guidage selon la revendication 4, caractérisé en ce que le rayon de courbure ($R_1$, $R_2$) des rainures (10, 20; 11, 21) va en diminuant depuis l'extrémité d'entrée (4, 34, 54) jusqu'à l'extrémité de sortie (7, 37, 57) du rail de guidage (2, 22, 32, 52).

6. Rail de guidage selon l'une des revendications 4 et 5, caractérisé en ce que les rainures (10, 20; 11, 21) présentent d'abord une forme rectiligne à l'endroit de leur extrémité d'entrée (rayon de courbure $R_2 = \infty$), pour devenir courbes peu avant leur extrémité de sortie (7, 27, 37).

7. Rail de guidage selon l'une des revendications 4, 5 et 6, caractérisé en ce que la forme courbe des rainures (10, 20 ; 11, 21) correspond à une flèche de courbure comprise entre 0,3 mm et 2,0 mm, et à un rayon de courbure R allant de 1,0 m à 10 m.

8. Rail de guidage selon la revendication 7, caractérisé en ce que le rayon de courbure $R_1$, à l'endroit de l'extrémité de sortie (7, 27, 37) a une valeur de 5 m.

9. Rail de guidage selon l'une des revendications 4 à 8, caractérisé en ce que les deux rainures (10, 11) sont parallèles l'une à l'autre et disposées en regard l'une de l'autre.

10. Rail de guidage selon l'une des revendications 4 à 9, caractérisé en ce que les fonds (8, 38; 9, 39) des rainures (10, 11) sont situés sur une nervure de séparation (12, 32, 52) disposée entre les deux rainures (10, 11), et dont l'épaisseur va en diminuant depuis l'extrémité d'entrée jusqu'à l'extrémité de sortie (7, 37).

11. Rail de guidage selon la revendication 10, caractérisé en ce que la nervure de séparation (12, 32, 52) est réalisée dans une matière dure et qui résiste à l'usure.

12. Rail de guidage selon l'une des revendiation 4 à 8, caractérisé en ce que les deux rainures (20, 21) sont disposées l'une au-dessus de l'autre avec un décalage dans le sens vertical, et se recouvrent à l'endroit de l'extrémité de sortie (27) du rail de guidage (22), l'amplitude de ce recouvrement correspondant sensiblement au recouvrement souhaité pour les bords (5, 6) de la pièce de tôle (3) à l'endroit du poste d'assemblage (23).

13. Rail de guidage selon la revendication 12, caractérisé en ce que les deux rainures (20, 21) se recouvrent déjà à l'endroit de l'extrémité d'entrée (24) du rail (22), l'amplitude de ce recouvrement initial étant plus faible que celle du recouvrement prévu à l'endroit de l'extrémité de sortie (27) du rail (22).

14. Rail de guidage selon l'une des revendications 4 à 8, caractérisé en ce qu'il comporte le long du trajet de guidage une série de galets (50, 51), disposés en deux rangées parallèles, et associés deux à deux avec un interstice où peuvent passer les bords (5, 6) de la pièce de tôle (3) comme dans une rainure de guidage.

15. Rail de guidage selon la revendication 14, caractérisé en ce que les pivots des galets de guidage (50, 51) sont portés par un bras support (52), qui joue le rôle de fond pour la voie de guidage analogue à une rainure constituée par les galets (50, 51).

16. Rail de guidage selon l'une des revendications 4, 12 et 15, caractérisé en ce que la forme courbe des rainures (10, 20; 11, 21) est obtenue par une déformation de flexion du rail de guidage (2, 22, 32) ou du bras support (52).

Fig.1

Fig. 2

## Fig. 3

7                12     8     10    10'        2

d

9     11    11'

## Fig. 4

11″            2

11             10'

11‴           10

            10'

8     9

## Fig. 5

11           2

            10

8    12    9

## Fig. 6

11           2

            10

8    12    9

Fig.7

Fig.8

Fig.9

Fig.10

Fig.11

Fig.12

Fig.13

41    40

37    38,39    R1    32    34

Fig. 14

51    57    C    50    52    54

XV    XVI    XVI    XV

Fig. 15    52    Fig. 16    52

51    50    51    50

51    50    51    50

7